# EUROPEAN PATENT SPECIFICATION

(11) **EP 2 945 474 B1**
(45) Date of publication and mention of the grant of the patent: **21.08.2019**
(21) Application number: 14714319.2
(22) Date of filing: 17.01.2014
(51) Int. Cl.: A01D 51/00, A63B 47/02

(54) **MANUAL DEVICE FOR PICKING UP FRUITS OR OTHER OBJECTS FROM THE GROUND**
MANUELLE VORRICHTUNG ZUR AUFNAHME VON FRÜCHTEN ODER ANDEREN OBJEKTEN VOM BODEN
DISPOSITIF MANUEL POUR RAMASSAGE DE FRUITS OU D'AUTRES OBJETS SUR LE SOL

(30) Priority: 17.01.2013 IT MI20130063
(43) Date of publication of application: 25.11.2015
(73) Proprietor: Valier, Alberto, 45100 Rovigo (IT)
(72) Inventor: VALIER, Marco, 10025 Pino Torinese (Torino) (IT)
(74) Representative: Torti, Carlo Maria Emilio
(86) International application number: PCT/IB2014/000062
(87) International publication number: WO 2014/111803

(56) References cited:
- WO-A1-2013/064660
- US-A- 3 215 293
- US-A- 3 227 298
- US-A- 3 804 449
- US-A1- 2012 279 194

## Description

### TECHNICAL FIELD OF THE PRESENT INVENTION

The present invention relates to the field of collecting objects from the ground. In particular, the present invention relates to a device adapted to allow fruits and/or objects to be collected from the ground. The present invention is therefore particularly adapted to be used in a very advantageous way in the field of agriculture for collecting or picking up fruits from the ground such as, for instance, apples, peaches or nuts, olives or the like; however, the present invention is adapted to be used in the field of sports and/or leisure activities, for instance for collecting tennis and/or golf balls from the ground, or even cartridges, cartridge cases or the like.

### DESCRIPTION OF THE STATE OF THE ART

Collecting or picking up objects from the ground is a problem arising in several situations and/or areas. One can, for instance, consider the need of picking up the balls scattered across a court after a tennis and/or ping-pong and/or golf match. However, a further area in which the need arises for picking up objects from the ground, in particular fruits, is in agriculture. In fact, very often the farming techniques comprise collecting fruits from the ground. Typical cases arise for instance in the field of farming, either in an intensive or non-intensive manner, of nuts, olives and/or other plants or trees whose fruits are removed from the plant and allowed to fall down to the ground, for instance by shaking the plant. In some other cases the fruits fall down spontaneously, for instance due to excessive ripening or diseases; in these cases it is necessary to collect the fruits from the ground for the purpose of avoiding infections from spreading and affecting the soil or ground.

The need arises therefore from the above for being equipped with a light and handy device or tool, characterized by reduced dimensions and reasonable costs, adapted to allow an operator to collect fruits from the ground in a non-mechanical way but still in a quick, efficient and comfortable way.

Several devices of the kind mentioned above are available on the market, these devices comprising a metallic container (cage or basket), substantially shaped like a barrel, wherein said container is fixed to a handle so as to be adapted to rotate on its own axis of symmetry. The cage or basket is composed of several wire-shaped elements made in plastic or metallic material which extends between a first and second anchoring element opposite to each other and rotatable. The fruits are collected by rotating the cage or basket. Once the cage or basket is full the fruits can be removed or extracted from the cage or basket by acting onto adjacent wire-shaped elements so as to increase their reciprocal distance so that the fruits can be put into suitable containers, for instance boxes or the like adapted to be stored and/or transported.

In devices of the kind described above it very often arises that the wire-shaped elements of the cage or basket become worn out or damaged. The need therefore arises to replace one or more of the worn out or damaged or even broken wire-shaped elements. However, such an operation is not possible or is at least not easy to be carried out in the devices known at present in the state of the art. In fact, for the purpose of replacing a single wire-shaped element, it is mandatory to disassemble the overall device or, in the worst cases, the overall device has to be replaced. A typical problem affecting the devices according to the state of the art therefore relates to the fact that the metallic wire-shaped elements may not be singularly replaced.

As a result of the fact that the wires or wire-shaped elements may not be singularly replaced, the maintenance operations reveal to be long and troublesome (and therefore also quite expensive), wherein even the assembly operations reveal to be long and troublesome and therefore expensive. In fact, according to one of the solutions known in the prior art, each of the anchoring elements comprises two opposite elements, wherein the end portions of the wire-shaped elements are received in the space between said two opposed elements, so that the anchoring of the end portions of the metallic wires is obtained by decreasing the reciprocal distance between the two opposite elements so as to clamp the metallic wires between the two opposite elements. However, according to this solution, additional means are needed for the purpose of keeping the metallic wires in their final position before being clamped between the two opposite elements; accordingly, the end portions of the metallic wires or wire-shaped elements have to be anchored in advance to the corresponding anchoring means and therefore before said anchoring means being fixed to the shaft or hubs of rotation, while a different solution would be more convenient, namely a solution allowing to place in advance the anchoring elements on the shaft or hubs of rotation and subsequently to proceed with anchoring the metallic wires or wire-shaped elements. The fact that the metallic wires may not be singularly removed and/or fixed respectively from and to the anchoring means results in a reduced versatility of the devices according to the prior art, which may therefore not be modified so as to match and/or be adapted to the different exigencies and/or circumstances, for instance the kind and/or dimensions of either the objects to be collected and/or the kind of ground. In fact, the devices according to the prior art do not allow to remove and/or insert additional wires or elastic elements for the purpose of increasing and/or decreasing the number of elastic elements, and therefore the dimension (width) of the spaces in between so as to match the dimensions of the fruits or objects to be collected, these operations being possible only if all the metallic wires are simultaneously removed, wherein however the overall device has to be assembled again. Moreover, it would be of significant advantage if the stiffness of the wires or wire-shaped elements could be selected or set depending on the kind of objects to be collected and/or of the kind of ground, so as to render it either easier or more difficult, for the objects, (in particular for the fruits)getting or entering into the cage or basket, still depending on the exigencies and/or circumstances.

In summarizing, the worst disadvantage of the devices or tools according to the prior art for collecting and/or picking up objects from the ground relates to the fact that the maintenance and/or repairing and/or assembly operations are very often difficult and troublesome (and therefore long and expensive) whilst, to the contrary, it would be of great advantage to have a solution allowing to simplify and speed up these operations so as to advantageously contain and/or reduce the overall costs arising for producing and/or fabricating and/or repairing or fixing and/or modifying the devices.

A further drawback of the devices according to the prior art has moreover to be taken into account, namely the fact that the anchoring of the metallic wires is very often obtained by means of heavy and bulky and even expensive components which reduce the handling of the device and generate unacceptable costs. For
instance, according to the solutions making use of opposed anchoring elements, the need arises to use bolts or the like, which not only increase the costs but also increase the load and render the device very cumbersome.

Examples of devices for picking up fruits or the like from the ground according to the prior are known from US 3, 215,293 and WO 2013/064660.

On the basis of the above considerations it is therefore a goal of the present invention that of proposing a device for collecting fruits or objects in general from the ground allowing to overcome the drawbacks affecting the known devices. In particular, an object of the present invention is that of proposing and realizing a tool for collecting objects from the ground wherein said tool is handy,
versatile, adapted to be modified so as to match a broad range of specific exigencies, which is adapted to be fixed and/or maintained in a simple way, and which can be assembled according to quick and simple processes and operations and therefore at reduced and/or contained costs.

### SUMMARY OF THE PRESENT INVENTION

The present invention is based on the general consideration that the drawbacks and/or disadvantages affecting the devices according to the prior art may be at least partially overcome by means of a device comprising the features of claim 1, wherein the elastic elements of the collecting container are adapted to be alternatively anchored and removed singularly or individually, i.e. one at a time. In fact, in this way, both the performances of the devices and its versatility and/or adaptability, as well as the assembly operations may be improved and simplified, respectively. The container may be in fact modified in an easy way by adding or removing wires to and from the structure, respectively, so as to modify the reciprocal distance between adjacent wires. Moreover, the kind of wires particularly adapted to the kind of objects to be collected may be selected. Finally, the assembly of the device may be extremely speeded up and simplified.

To this end, the present invention is based on the further consideration that the feature according to which the wires or metallic elements may be individually replaced can be advantageously obtained by anchoring the end (end portion) of each single wire or metallic element elastically (in an elastic way), namely by deforming elastically said end (end portion) so as to engage same to said element or anchoring means by means of an elastic engagement (elastic deformation). In this way, using the aptitude of the wire or metallic element to again take over the conformation or shape they had before being elastically deformed, it will be possible to engage their end portions to corresponding engaging means of said anchoring means or elements, thus avoiding that same accidently become disengaged. Moreover, by acting individually on each wire or metallic element, on particular on its end portion and against the elastic force, it will be possible to obtain the disengagement of the wire or element so that it will be possible to remove and/or replace same and so on. On the basis of the previous considerations, a device will be described in the following, namely a device for collecting or picking up fruits or other objects from the ground, wherein said device comprises a container or basket adapted to be rotated on a rotation axis and comprising a plurality of elastic elements extending between first and second anchoring elements opposite to each other and rotatably disposed along said axis of rotation, said container or basket allowing said fruits or other objects to enter inside said container by means of elastic deformation of said elastic elements during rotation of said container in contact with the ground on said axis of rotation, wherein a terminal portion of at least one of said elastic elements is received inside a corresponding receiving seat of at least one of said anchoring elements so as to be subjected to elastic deformation, and wherein an end portion of said at least one elastic element is engaged by means of elastic deformation with said corresponding engaging means of said at least one anchoring element so as to avoid the accidental exit or disengagement of said terminal portion from said receiving seat.

The feature of the device of the present invention according to which a terminal portion of at least one of said elastic elements is received inside a corresponding receiving seat of at least one of said anchoring elements so as to be subjected to an elastic deformation, so that an end portion of said at least one elastic element is engaged with said corresponding engaging means of said at least anchoring element due to elastic deformation allows each element or metallic wire to be individually disengaged from the corresponding anchoring means, thus guaranteeing that said wires or metallic elements can be individually replaced or substituted.

The above reveals to be particularly useful during maintenance of the device, for instance as soon as one or more damaged or worn wires need to be substituted. Moreover, the device may be easily adapted to the dimensions and characteristics of the objects to be collected by selecting wires having diameter, length and being made of a material suitable for the purpose. Moreover, it is even possible to select the preferred or more convenient number of wires or elastic elements. For instance, for collecting objects with limited dimensions, such as walnuts or ping pong balls, it is possible to add additional wires to the device so as to increase the density of same, thus decreasing their reciprocal distance. To the contrary, for collecting objects of bigger dimensions, such as for instance apples or tennis balls, it is possible to remove as many wires as needed for increasing the distance between adjacent wires, thus rendering same so as to match the dimensions of the fruits or objects. Moreover, by avoiding the use of clamping and/or engaging means, such as bolts or the like, the weight and overall dimension of the device may be contained with corresponding evident advantages in terms of handling and ease of use.

Finally, the device according to the present invention is adapted to be put on the market as an assembling kit, wherein the assembly may be completed by the final user or customer, thus allowing in this way to reduce considerably the delivering and transporting costs. In particular, the final user will be able to assemble the device according to his particular exigencies, for instance using the number of elastic elements mostly adapted to his purposes.

In particular, the present invention relates to a device according to the main claim 1.

In the same way, the distance between said engaging means and said inserting aperture may be considerably less than the distance between said engaging means and said curved portion of said at least one elastic element.

Preferably, said end portion comprises an engaging surface disposed in engagement due to elastic deformation against a corresponding engaging surface of said engaging means.

Eventually the distance between each of said engaging surfaces and said inserting aperture is considerably less than the distance between each of said engaging surfaces and said curved portion of said elastic element.

According to a further embodiment, said engaging surface comprises a concave portion in which there is received a convex portion of said engaging means.

According to a further embodiment, said terminal portion is accessible from outside said receiving seat so that said end portion may be disengaged from said engaging means by elastically deforming said terminal portion, said terminal portion being therefore adapted to be extracted from said receiving seat by disengaging said end portion from said engaging means.

Preferably, said terminal portion is accessible through a hole or aperture by means of which said receiving seat is in communication with the outside, said hole or aperture being adapted to allow the insertion of a tool adapted to disengage said portion from said engaging means and being eventually positioned in proximity of said inserting aperture.

These solutions render it particularly easy to individually disengage said wires or metallic elements, thus allowing same to be replaced and/or removed or also added individually.

According to a further embodiment of the device of the present invention the said at least one anchoring element comprises a first portion and a second portion reciprocally fixed one to the other in a rigid and definitive or final (ultimate) way, said first portion comprising preferably an engaging hub or sleeve received at least partially in an engaging seat of corresponding shape of said second portion.

Preferably, the external surface of said engaging hub comprises portions disposed in engagement against corresponding portions of the internal surface of said engaging seat, said portions of the external surface of said hub and said corresponding portions of said internal surface of said receiving seat being located or lying on conical surfaces.

According to a further embodiment, said hub comprises longitudinal recesses or cavities of said external surface located in correspondence of longitudinal recesses or cavities of the internal surface of said receiving seat so as to define engaging seats for fixing means such as screws and the like adapted to reciprocally fix in a rigid and definitive or final way, said first portion and said second portion.

The different embodiments and/or solutions cited above render it particularly easy to realize the anchoring element.

According to a further embodiment of the present invention, the device for collecting objects from the ground comprises moreover a handle adapted to be fixed to at least one of the end portions between which said container or basket extends. The handle, which is adapted to be gripped during the collecting operations, allows the user or operator to set the pressure on the ground of the container whilst it is rotated and accordingly on the fruits or objects to be collected, depending on the shape and overall dimensions of said objects. The handle allows moreover the user to push the container on the ground and accordingly to exploit the collection of the objects from the ground without any need to bend down and to assume unnatural positions which could cause damages or diseases to his back.

Further embodiments of the device according to the present invention are defined in the depending claims.

### BRIEF DESCRIPTION OF THE DRAWINGS

Further features and advantages of the present invention will become clearer on the basis of the following descriptions of some embodiments of the device according to the present invention depicted in the drawings. It is however to be noted that the present invention is not limited to the embodiments described in the following and depicted in the drawings, but rather that the present invention comprises all those embodiments which are encompassed by the claims.

In the drawings, identical and/or similar and/or corresponding component parts of features are identified by the same reference signs or numbers. In particular, in the drawings:
Figures 1 and 2 depict respectively a front view and a prospective view of an embodiment of the device according to the present invention.
Figures 3, 4a and 4b depict respectively two front views and a lateral view of some particular features of the device according to corresponding embodiments of the present invention.
Figure 5 depicts a sectional view of a device according to a further embodiment of the present invention.
Figures 5A, 5B, 5C, 5D, 5E, 5F and 5G depict corresponding prospective views of component parts of the device according to the embodiment of the present invention depicted in Figure 5.
Figure 5H depicts a sectional view of a device according to a further embodiment of the present invention.
Figures 6, 6A and 6B depict a sectional view and two lateral views, respectively, of a device according to a further embodiment of the present invention.
Figure 7 shows a sectional view of a device according to a further embodiment of the present invention.
Figure 8 shows a sectional view of a device according to a further embodiment of the present invention.
Figure 9 shows a sectional view of a device according to a further embodiment of the present invention.
Figure 10 shows a sectional view of a device according to a further embodiment of the present invention.
Figure 11 shows a top view and a sectional view of a further embodiment of the device for collecting objects according to the present invention.
Figure 12 shows a view in partial section of a further embodiment of the device according to the present invention.

### DETAILED DESCRIPTION OF THE PRESENT INVENTION

Although in the following a description will be given of the embodiments of the present invention depicted in the drawings, it has to be noted that the present invention is not limited to these particular embodiments; to the contrary, the particular embodiments described in the following clarify several aspects of the present invention, the scope of which is defined by the claims.

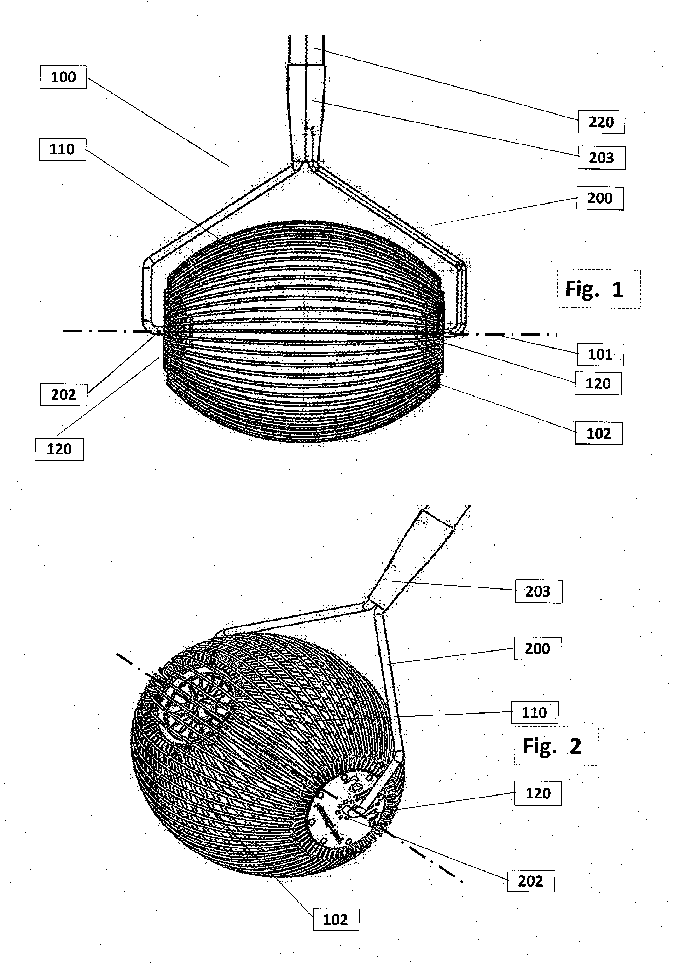

It appears from Figures 1 and 2 that the device 100 according to the embodiment of the present invention depicted therein comprises a container 110 adapted to be rotated on a rotation axis 101 which, in this case, corresponds to the axis of symmetry of the container 110. The container or basket 110 comprises a plurality of elastic elements 102, whose opposed end portions are fixed to a first and a second anchoring element 120, respectively, said anchoring elements being rotatably disposed along said axis of rotation 101.

The elastic elements 102 may have an elongated shape (wire-like) as in the case depicted in the drawings and may be realized in each material which is enough elastic so as to allow the collection of fruits of objects from the ground (see the following detailed description). For instance, among the materials suitable for forming or realizing the elastic components plastic materials may numbered as well as technopolymers and/or synthetic and/or composite materials, or even metals such as iron or steel or the like.

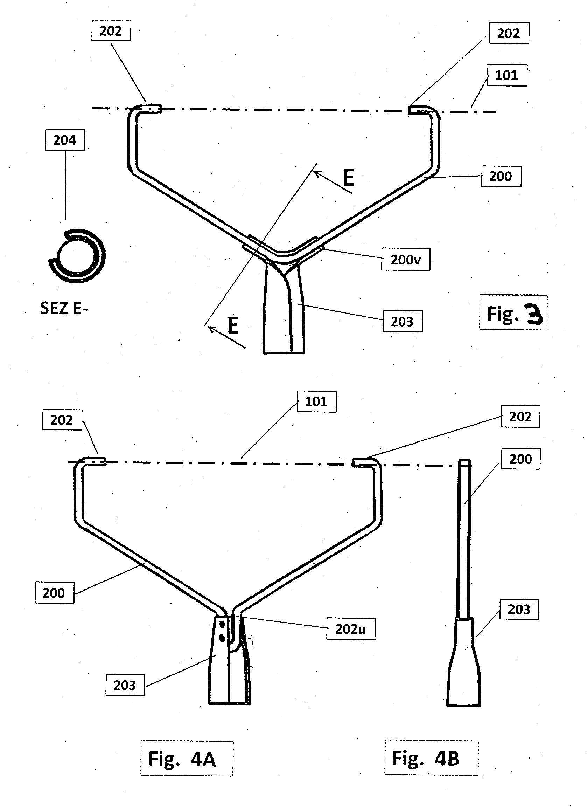

The device depicted in Figures 1 and 2 comprises moreover a handle 220 which a user or operator may handle or grip and which facilitates the collecting operations. The handle 220 is fixed to an arch 200 whose opposite end portions 202 lie on the rotation axis 101 and define two opposite sleeves or hubs of rotation on which the first and second anchoring elements 120 are rotatably disposed. In the embodiment depicted in Figures 1 and 2, the portion of the handle 220 facing the container 110 is fixed to the arch or fork 200 by means of an intermediate element 203. In particular, according to the embodiment depicted in Figures 3, 4a and 4b, the arch comprises and intermediate portion 200V shaped like a "V" (Figure 3), or shaped like a "U" (Figures 4A and 4B) received inside the intermediate element 203. To this end (Figure 3) the intermediate element 203 may comprise two shelves capped together by means of fixing means such as screws or the like or even soldering points, or said intermediate element 203 may be adequately deformed or warped (Figures 4A and 4B) so as to confer to same a shape adapted to receive and house the intermediate portion of the arch 200, so as to be rigidly fixed to said intermediate portion 200V. Of course, according to a further embodiment of the present invention not depicted in the drawings, the arch 200 may be shaped so as to define a single shaft or hub of rotation common to the two anchoring elements 120.

The collection of objects from the ground is carried out as follows. A user or operator, once he has gripped the handle 220 of the device 100, pushes the device forward whilst keeping the container 110 in contact with the ground so that the container is brought to rotate on its own axis of rotation 101. In this way, the container 110 will come into contact with the fruits or objects scattered on the ground (in a position substantially above same) thus exerting a pressure (regulated and/or set by the operator) on the fruits which will therefore be captured or clamped between the ground and the rotatable container 110. The pressure of the container 102 on the fruits (which can be set by the user or operator by acting on the handle of the device) will bring two elements or elastic wires 102 in contact with the fruit(s) or object(s) to move away from each other so as to define and aperture or passage between them large enough to allow said fruit(s) or object(s) to go through said aperture or passage. Due to the rotation of the container 110 on the axis of rotation 101, and due to the stiffness of the wires 102, the object(s) will go through the passage and will enter the internal space of the container 110. The further rotation of the container 110 whilst advancing on the ground will result in the passage previously open between two elastic wires 102 in contact with the object or fruit to close, so that the object will be trapped inside the container 110. Once the container 110 is full, it will be possible to empty same by shaking or, more practically, by acting on two adjacent elastic elements or wires 102 so as to increase their reciprocal distance and to enlarge the aperture or passage between them.

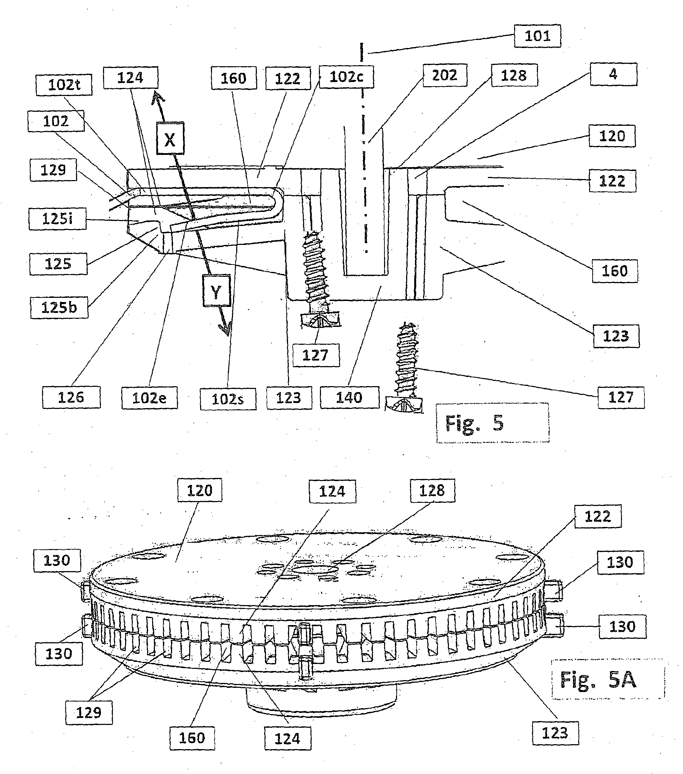

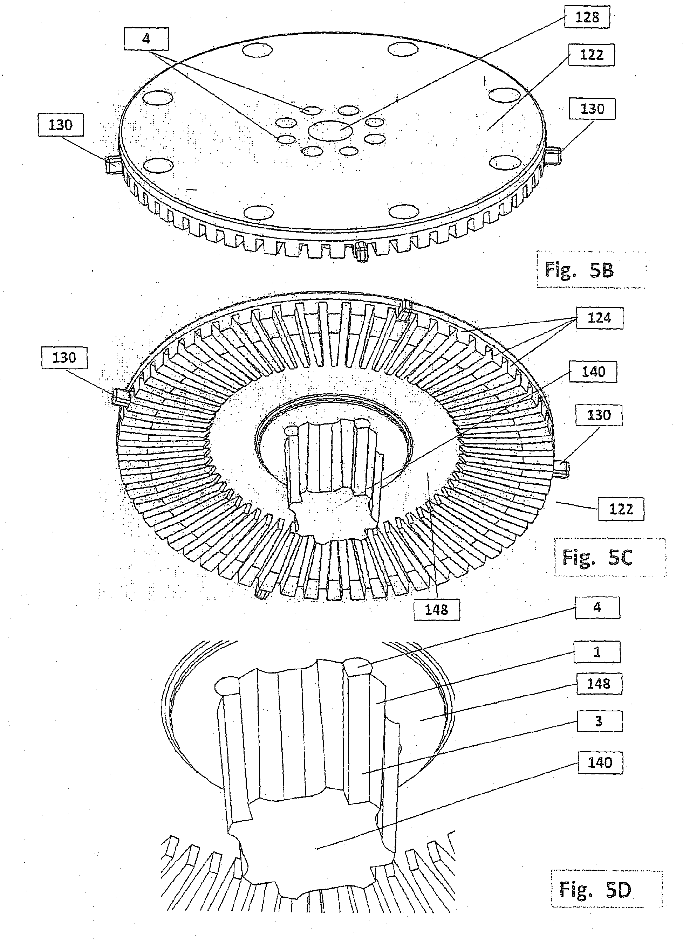

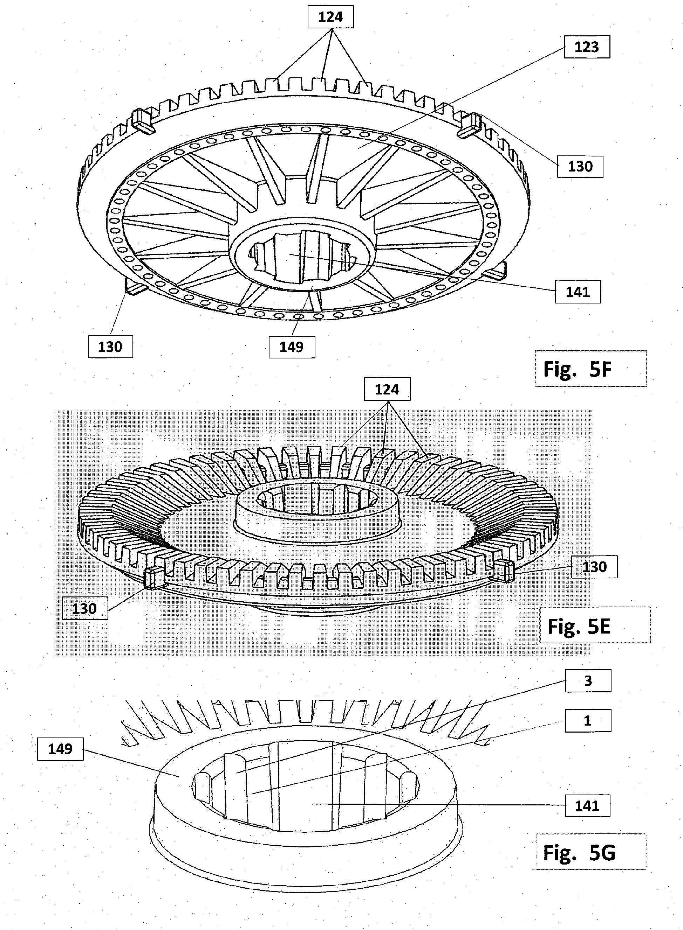

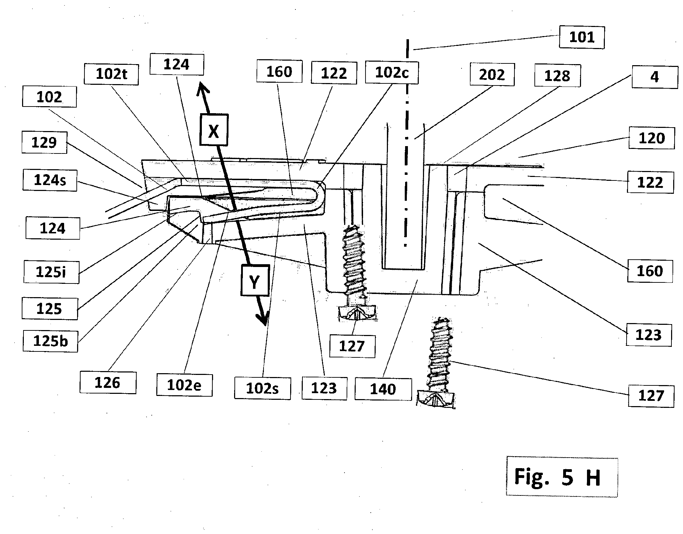

It appears clearly from Figures 5, 5A, 5B, 5C, 5D, 5E, 5F and 5G that the device according to the embodiment depicted therein comprises an anchoring element (at least one) 120 rotatably fixed to one of the hubs 202 of the arch 200 (see Figures 1 and 2 of the device itself). The anchoring element 120 comprises a receiving seat substantially cylindrical 128 in which there is received at least partially said hub of rotation 202. The anchoring elements 120 are formed by two opposite portions or shells 122 and 123 both substantially disc-shaped, wherein the shell 122 will be identified in the following as external shell (facing the outside of the device and therefore toward the top in Figure 5) whilst the second shell 123 will be identified in the following as internal shell (facing the inside of the device and therefore facing toward the bottom in Figure 5). The external shell 122 and the internal shell 123 are shaped and opposite one to each other so as to define a plurality of receiving seats 160 (two of them being depicted in Figure 5) wherein each of them extends radially and comprises and inserting or inlet aperture 129 located on the external circumference of the anchoring element 120, along with a closure element opposite the said inserting aperture 129; in other words, each of the receiving seats 160 is blind or closed in the radial direction, meaning in the direction from the inserting aperture toward the axis of rotation 101 of the device; in particular, (see Figures 5B and 5C), the external shell 122 comprises an external surface (facing toward the outside of the device) and an internal surface (facing toward the inside of the container or basket 110) wherein radial ribs 124 extend from said internal surface and wherein, with the two shells internal 123 and external 122 in their ultimate assembly position represented in Figure 5A, said ribs are located in correspondence of equivalent ribs 124 which extend from the internal surface (facing toward the external shell 122) of the internal shell 123 (Figures 5E and 5F). The spaces between the ribs 124 of the external shell 122 and of the internal shell 123 define therefore the receiving seats 160 cited above.

Whilst the assembly of the anchoring element 122 and therefore the reciprocal fixation of the external and internal shells 122 and 123 will be described in the following, it is possible to appreciate from Figure 5 that in each of the receiving seats 160 there is received the terminal portion 102t of a wire of elastic element 102. Said terminal portion 102t comprises in particular a curved portion 102c which confers to said terminal portion 102t a substantially "U" or hook-shape. A portion 102s following said curved portion 102c is interposed between said curved portion 102c and the real end portion 102e of the terminal portion 102t of the wire or elastic element 102. In particular, said real end portion 102e is put in engagement with engaging means 125 which extend from the internal surface of the internal shell 123 facing toward the external shell 122; in particular, said engaging means close, but only partially, said inlet or inserting aperture 129 of the receiving seat 160 which, as explained above, is obtained by bringing the ribs 124 of the internal shell 123 and external shell 122 in reciprocal correspondence as depicted in Figure 5A.

The insertion of the terminal portion 102t of the wire or elastic element 102 into the receiving or anchoring seat 160 is therefore carried out as follows.

By progressively inserting the terminal portion 102t (with the curved portion 102c facing toward the anchoring element 120) into the receiving seat 160 through the aperture 129, the part or portion 102s following the curved portion will come into contact with the guiding surface 125i of the engaging means 125, so that the terminal portion 102t will be elastically deformed, and the end portion 102e will be moved closer to the portion substantially rectilinear of the terminal portion 102t as indicated by the arrow X in Figure 5. With the terminal portion 102t of the wire or metallic element completely inserted into the seat 160, the pushing action exerted by the guiding surface 125i on the end portion 102e will end, so that said end portion 102e, due to the elasticity of the wire or metallic element 102, will again try to take over a shape close or similar to the original shape this end portion 102e had before being inserted into the receiving seat 160. In other words, the end portion 102e will move as indicated by the arrow Y in Figure 5. In this way, the terminal portion (the end portion) 102e will come into engagement with a corresponding engaging surface 125b of the engaging means 125, thus avoiding any risk for said end portion 102e to become accidentally disengaged from said engaging means 125, and thus avoiding any risk for said terminal portion 102t to accidentally exit from said receiving seat 160 and therefore avoiding any risk for the wire or metallic element 122 to become or get free from said anchoring element 120.

The above demonstrates that, in the device according to the present invention, the wires or metallic elements 102 may be efficiently and reliably anchored to the respective anchoring elements 120.

Moreover, the anchoring may be executed individually for each wire or metallic element 102, and without any need to modify the reciprocal disposition of the external shell 122 and the internal shell 123 of the anchoring element 120 which, to the contrary, may be previously assembled as depicted in particular in Figures 5 and 5A.

The device according to the present invention also allows to disengage the wires or metallic elements 102 individually from the anchoring element 120 and still without any need to modify the reciprocal disposition of the two internal shell 122 and external shell 123.

This is in particular rendered possible or at least simplified by the fact that, as appearing from the drawings, the engaging means 125 are positioned in proximity of the inserting aperture 129 of the receiving seat; in particular, the distance between the engaging means 125 and the closed or blind bottom of the seat 160 is considerably bigger than the distance between the engaging means 125 and the inserting aperture 129, so that the distance between the engaging means 125 and the inserting aperture 129 is considerably smaller than the distance between the engaging means 125 and the blind or closed bottom of the seat 160 and/or of the curved portion 102c of the elastic element 102. In the same way, the length of the portion 102s of the elastic element 102 following the curved portion 102c is bigger than the distance between the end portion 102e and the inserting aperture 129. In this way, the end portion 102e of the element 102 is closer to the inserting aperture 129 than the curved portion 102c of the elastic element 102 (so that, accordingly, in the same way, the surface of the end portion 102e which is engaged with the surface 125b of the means 125, is closer to the aperture 129 than to the curve of the portion 102c and/or to the blind or closed bottom of the aperture 129), so that the end portion 102e can be easily reached through a through hole 160 by means of which the receiving seat 160 is in communication with the outside, in particular with the internal space of the basket defined by the plurality of elastic elements 102. In the particular case depicted in the drawing, the through hole or through aperture 126 is realized in the internal shell 123, in correspondence (in proximity) of the end portion 102e of the terminal portion 102t of the wire or metallic element 102. Accordingly, by inserting an adequate tool (for instance a simple nail) into the through aperture 126 it will be possible to push the end portion 102e toward the inside of the receiving seat 160 and therefore still, as indicated by the arrow X, in Figure 5. In this way, the end portion 102e will be disengaged from the engaging or abutting means 125, in particular from the engaging or abutting surface 125d, so that by pulling the wire or metallic element 102 substantially in the radial direction, it will be possible to remove the end portion 102t from the receiving seat 160, thus detaching or disengaging same from the anchoring element 120.

In the following a description will be given of the assembly process of the anchoring element 120 of the device according to the embodiment described above.

Figure 5C clearly shows that the external shell 122 comprises a hub or sleeve 140, wherein said hub or sleeve is empty and blind and extends toward the inside, the inside of said hub or sleeve defining the receiving seat 128 for the axel shaft or hub 202. In the same way, it appears clearly from Figure 5E (see also the details of Figure 5G) that the internal shell 123 comprises a portion substantially cylindrical which defines a receiving seat 141 adapted to receive at least partially the hub or sleeve 140 of the external shell 122 as shown in particular in Figure 5.

The assembly of the external shell 122 and the internal shell 123 starts therefore by inserting the hub or sleeve 140 of the external shell 122 into the receiving seat 141 of the internal shell 123 whilst the ribs 124 extending from both the internal surface of the external shell 122 and the internal surface of the internal shell 123 have to be brought into correspondence. To this end it will be possible to use aligning protrusions or projections 130 formed on both the radial external surfaces of the external shell 122 and the radial external surface of the internal shell 122. By exactly aligning the protrusions 130 it will be possible to precisely align the protrusions or ribs 124 so as to define the receiving seats 160. The external surface of the hub or sleeve 140 is provided moreover with a longitudinal surface portion 1 located on an imaginary or fictitious conical surface tapered toward the inside, meaning that the diameter of the cross sections of the hub or sleeve 140 decrease when the distance from the internal surface of the external shell decreases, ie. by coming closer to the centre of the device. In the same way, the internal surface of the seat 141 comprises a longitudinal portion 1 located on an imaginary or fictitious conical surface with a shape substantially corresponding to that of the imaginary or fictitious conical surface on which the surface portions 1 of the sleeve 140 are located. The insertion of the sleeve 140 onto the seat 141 therefore is prosecuted until the surface 148 of the annular ring outside the sleeve 140 (Figures 5C and 5D) will come into contact with the surface 149 of the annular ring outside the seat 141 (Figures 5F and 5G), both said surfaces 148 and 149 being substantially perpendicular to the longitudinal axis of symmetry of the sleeve 140 and the longitudinal axis of symmetry of the seat 141, respectively. In this way, by aligning the protrusions 130 the surface portions 1 of the sleeve 140 and the seat 141, respectively, will be brought into substantial alignment so as to define a clearance or backlash or empty space between the corresponding surface portions 1. Said backlash or empty space allows to concentrically align the shells 122 and 123 which, to this end, can be eventually rotated one with respect to the other in a substantially free way, until the protrusions 139 and therefore the ribs 124 and the surface portions 101 are brought into correspondence. The sleeve 140 comprises moreover grooves or depressions 3 which, in the condition of completed or ultimate assembly of the element 120 (wherein the protrusions 130 are in reciprocal correspondence) are located in correspondence of corresponding grooves or depressions 3 formed in the receiving seat 141. The correspondence of the grooves 3 of the sleeve 140 and the grooves 3 of the receiving seat 141 defines a plurality of holes which communicate with corresponding holes 4, which in turn communicates with the outside of the anchoring element 120 as depicted in Figure 5A. By inserting fixing screws 127 into the holes defined by the depressions 3 of both the sleeve 140 and the seat 141, in particular in such a way that the tips of the screws are received inside the communication holes 4, the screws 127 will be brought into engagement into the external shell 122 and the internal shell 123, so that said shells will be reciprocally fixed in a rigid and ultimate way. To this end, it has to be clarified that, within the scope of the present invention, the expression "rigid and ultimate fixation" means that removing the screws 127 will not be possible without damaging the two shells 122 and 123, so that removing the screws 127 will result in the anchoring element 120 to be no longer usable.

In the following, with reference to Figure 5H, a description will be given of a further embodiment of the device according to the present invention; of course, in Figure 5H, component parts and/or features of the device depicted therein which have already been described with reference to other figures are identified by the same reference numbers or signs.

The device depicted in Figure 5H differs from that according to Figures from 5A to 5G in the conformation and dimensions of the ribs 124 which protrude from the internal surface of the external shell 122 (and therefore face toward the internal shell 123). In this case, in fact, said ribs 124 (at least one of them) comprise and end portion 124s which protrudes radially towards the outside and extends beyond the circular external edge of the internal shell 123. This solution allows a more reliable reciprocal anchoring of the external shell 122 and the internal shell 123, thus avoiding accidental deformations or distortions of the receiving seats 160, as well as accidental movements or de-placement of the terminal portion 102t of the wire or metallic element 102 received inside them.

To the contrary, in the case of the device according to Figure 5H, the position of the end portion 102e of the elastic element 102 and/or of the engaging means 125, as depicted, is similar to that of the device already described above, meaning that the end portion 102e (the engaging surface of the end portion 102e) and/or the engaging means 125 (in particular the engaging surface 125b) are closer to the inserting aperture 129 than to the blind bottom of the aperture 129 and/or to the curved portion 102c of the elastic element 102.

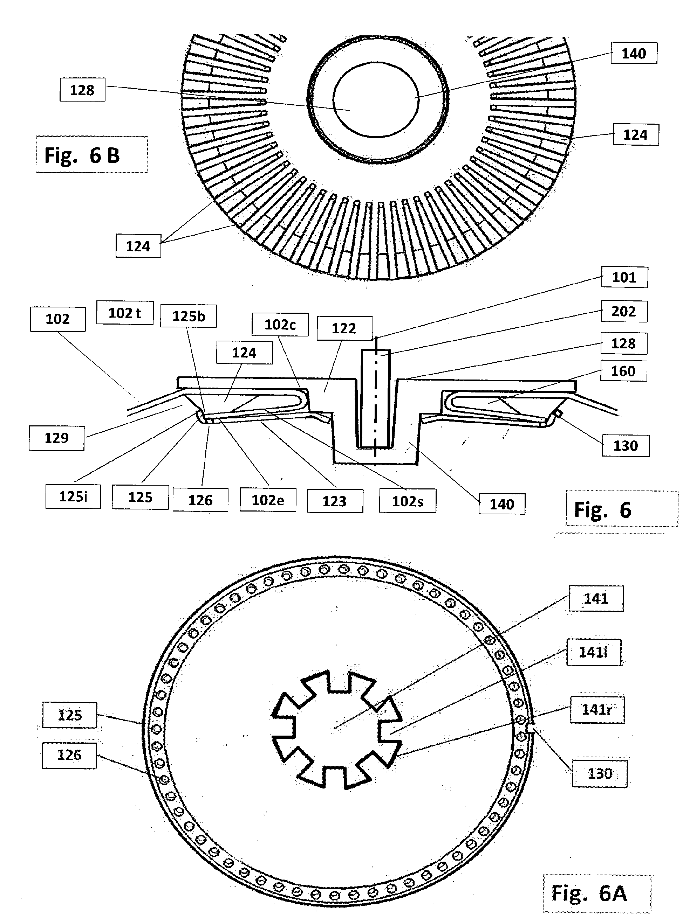

In the following, with reference to Figures 6, 6A and 6B, a description will be given of a further embodiment of the device according to the present invention; as usual, in Figures 6, 6A and 6B, those component parts and/or features of the device which have already been described above with reference to other drawings are identified by the same reference numbers or signs.

The main difference between the embodiment depicted in Figures 6, 6A and 6B and that previously described relates to the conformation of the internal shell 123 which, in this case, is realized so as to have the shape of a plate with elastic portions in metallic or plastic material. This solution allows the two external shell 122 and internal shell 123 to be reciprocally fixed according to operations which differ from them to be carried out for reciprocally fixing the two shells as previously described with reference to Figures from 5A - 5G. In fact, in this case, the receiving seat 141 (for receiving the sleeve 140 of the external shell 122) may simply comprise a hole with radial indentations 141r so as to define a plurality of small corresponding elastic tongs 1411. The ultimate and rigid fixation of the two shells 122 and 123 may therefore be obtained in this case by driving said elastic tongs 1411 into said sleeve 140, wherein the reciprocal position of the two shells 122 and 123 may be obtained for instance again by aligning the alignment protrusions 130 formed on both the external shell 122 and the internal shell 123.

A further distinguishing feature of this embodiment relates to the fact that the protruding ribs 124 which define the receiving seats 160 belong solely to the external shell 122 and therefore extends from its internal surface. Finally, the engaging means 125 are realized by means of a peripheral bent portion substantially cylindrical which also defines the guiding surface 125i for the elastic deformation of the terminal portion 102t during insertion of same into the receiving seat 160 through the radial aperture 129, as well as the engagement or abutting surface 125b on which the end portion 102e of the wire or elastic element 102 comes into contact or abutment. Also in this case the engaging means 125 are positioned in proximity of the inserting aperture 129 of the receiving seat, so that the distance between the engaging means 125 and the blind bottom of the seat 160 is considerably longer than the distance between the engaging means 125 themselves and the inserting aperture 129, wherein the distance between the engaging means 125 and the inserting aperture 129 is therefore considerably less than the distance between the engaging means 125 and the blind bottom of the seat 160 and/or the curved portion 102c of the elastic element 102. In the same way, the length of the portion 102s of the elastic element 102 following the curved portion 102c along the development path of the terminal portion 102t is more than the distance between the end portion 102e and the inserting aperture 129, so that the end portion 102e of the element 102 is closer to the aperture 129 than to the curved portion 102c of the elastic element 102 (so that, therefore, in the same way, the engaging surface of the end portion 102e, which is still engaged with the surface 125b of the means 125, is closer to the aperture 129 than to the curved portion 102c and/or the blind bottom of the aperture 129).

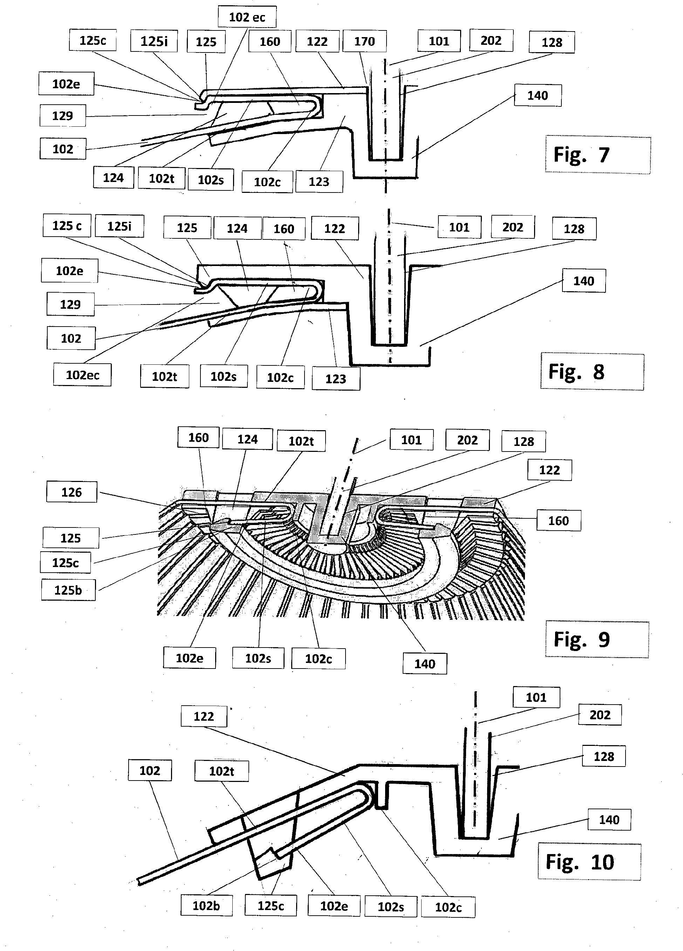

The embodiment depicted in Figure 8 is substantially similar to the embodiment described above with reference to Figures 6, 6A and 6B; also in this case, in fact, the internal shell 123 is formed as a plate (in plastic or metallic material) reciprocally anchored or fixed in a rigid and ultimate way to the external shell 122 as just described above. The embodiment according to Figure 8 differs from the other embodiments previously described as to the shape of the end portion 102e of the terminal portion 102t of the elastic element or wire 102, as well as to the shape and location or disposition of the engaging means 125.

In fact, as appearing from Figure 8, the end portion 102e comprises a "V" shaped portion which defines therefore a concave surface 102ec. The contrast elements 125 have a corresponding shape and comprise therefore a "V" shaped portion which protrudes from the external shell 122 and extends towards the inside of the receiving seat 160. The engaging means 125 define therefore a convex surface which is engaged in the end portion 102e due to elastic deformation of same, in particular in the concave surface 102ec of the end portion 102e. An important distinguishing feature of these embodiments relate moreover to the fact that the end portion 102e is still located in proximity of the inserting aperture 129, but however outside the seat 160, said end portion 102e being therefore adapted to be accessed or reached (for instance by means of a tool) directly from outside the anchoring element 120, so that any need is avoided to realize or form a hole or aperture for the purpose of allowing to gain access to the end part or portion 102e of the terminal portion 102t of the metallic wire or element 102. The external half of the convex surface 125c of the engaging means 125 defines the guiding surface 125i which allows insertion with elastic deformation of the terminal portion 102t into the receiving seat 160 through the inserting aperture 129. Accordingly, the anchoring and removing operations of the terminal portion 102t to and from the anchoring element 120, respectively, are substantially similar to those already described with respect to other embodiments since the location or disposition of the end portion 102e of the engaging means 125 with respect to both the inserting aperture 129 and the blind bottom of the receiving seat and/or the curved portion 102c is similar too.

The embodiment depicted in Figure 7 is substantially similar to the embodiment depicted in Figure 8, in particular as to the shape of the end portion 102e of the flexible element or wire 102, as well as to the shape and disposition of the engaging means 125. In fact, the end portion 102e comprises a part shaped like a "V", with a concave surface 102ec, in which there is engaged a "V" shaped portion of the engaging means 125 and which comprises a convex surface 125c, as well as a guiding surface 125i. Accordingly, the anchoring and removing operations of the terminal portion 102t to and from the receiving seat 160, respectively, will be similar to those previously described with reference to Figure 8. The distinguishing feature of this embodiment relates to the fact that, in this case, it is the external shell 122 which is realized like or in the form of a plate in plastic or metallic material. Accordingly, the sleeve 140 for receiving the hub or axle shaft 202 will belong to the internal shell 123, whilst the ribs or protrusions 124 which define the receiving seats 160 protrudes from the internal shell 123 so as to extend towards the external shell 122. Moreover, the external shell 122 comprises a through hole 170 for receiving at least partially inside the hub or axle shaft 202.

The embodiment depicted in Figures 9 and 10 is characterized by the fact that the anchoring element 120 comprises a single or unique shell 122 with a sleeve 144 receiving the axle shaft or hub of rotation 202. The ribs 124 extend from the internal surface of the shell 122 (toward the inside of the device and therefore toward the bottom in Figures 9 and 10) and define an engaging portion 125 which comprises a surface 125c substantially parallel to the internal surface of the shell 122, as well as an engaging surface 125b substantially perpendicular to both the internal surface of the shell 122 and the surface 125c, and which is engaged as described above by the end portion 102e of the terminal portion 102t of the metallic wire or element 102. These solutions are to avoid the use of a second shell and allows to define in a simple and efficient way the entrances or accesses 126 of each of the receiving seats 160, thus allowing to act on the end portion 102e of the terminal portion 102t either manually or by means of a tool, so as to easily disengage the metallic wire or element 102 from the receiving seat 160. As to the anchoring operations of the terminal portion 102t inside the receiving seat, these are substantially similar to the operations described above with reference to other embodiments.

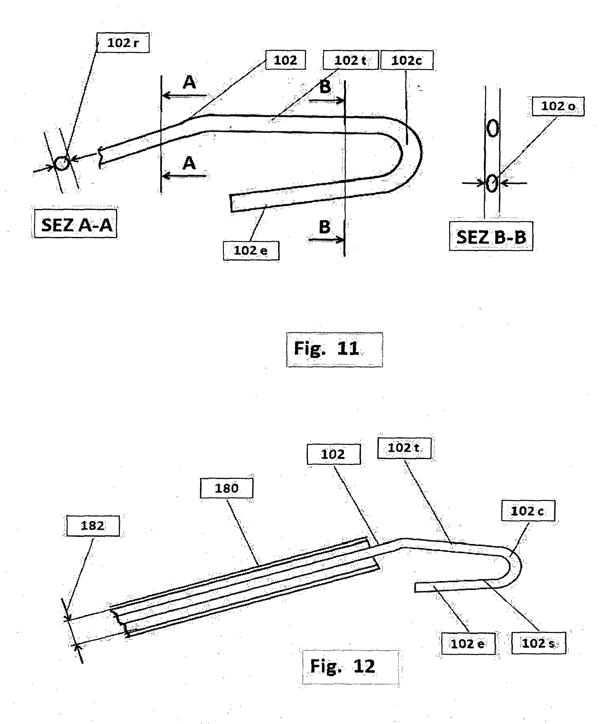

A detail of a further embodiment of the device for collecting objects according to the present invention is depicted in Figure 11, wherein component parts or features common to embodiments already described with reference to other figures are identified by the same reference numbers or signs.

It arises in particular from Figure 11 that at least one of the terminal portions 102t of the elastic element or wire 102 has a cross section substantially shaped like an elipse or ellipsoid (section B-B), which is different from the cross section of the portion of the element or wire 102 comprised between the opposite terminal portions 102t, wherein this portion has a cross section substantially circular, with a diameter 102r (section A-A). The overall dimensions 102o of the terminal portion 102t with an ellipsoidal cross section (corresponding to the length of the short axis of the ellipsoid) will be less or corresponding to the dimension (width) of the receiving seat 160 so as to allow the terminal portion 102t to be received inside the corresponding receiving seat 160.

This solution allows to confer to the elastic element 102 a flexional stiffness different from the flexional stiffness it would have if its cross section was the same along its entire development path or length, and therefore to adapt the elastic element 102 to the different conditions and/or exigencies, in particular to the kind and dimension of the fruits or objects to be collected.

In particular, in the case in which the diameter 102r is longer than the overall dimension 102o, the flexional stiffness of the wire 102 will be more than that of a wire 102 with constant diameter and cross section, whilst in the case in which the diameter 102r is less than the overall dimension 102o, the flexional stiffness of the wire will be less than that of a wire with constant diameter and cross section.

Of course, it will be possible to apply the solution just described above to either each of the elastic elements or to only some of them, wherein each elastic element 102 can have either only one or both its terminal portions formed as described above.

A further embodiment of the device for collecting fruits or objects according to the present invention is depicted in Figure 12 wherein, as usual, component parts or features common to other embodiments already described above with reference to other figures are identified by the same reference numbers or signs.

According to these further embodiments, the diameter of one or more of the elastic elements 102 is artificially increased without substantially modifying its flexional stiffness. To this end, the elastic element 102 is inserted into a tubular sheath 180 of plastic or elastomeric material, wherein the flexional stiffness of the sheath is less than that of the element 102. The tubular sheath 180 will therefore have an elasticity and an internal diameter 102 adapted to allow the insertion of the terminal portion 102t of the element 102, comprising the bent "U" shaped portion 102u.

This solution reveals to be particularly useful in the case in which the need arises to collect or pick up objects, for instance pine cones of pine trees, with surface roughness or irregularities with average dimensions bigger than the diameter of the elastic metallic element, so that the elastic elements would risk being trapped in the surface roughness or irregularities of the objects to be collected.

Of course, it will be possible to use the tubular sheath 180 either for all or only some of the elastic elements 102, depending on the exigencies and/or circumstances.

It has therefore been demonstrated by means of the above detailed description of the embodiments depicted in the drawings that the present invention allows to obtain the desired results and to overcome or at least to reduce the drawbacks affecting the devices according to the prior art for collecting fruits or objects from the ground.

In particular, it has been demonstrated that the collecting tool or device according to the present invention allows to be assembled in an easy way and at correspondingly reduced costs, and to replace the worn out and/or damaged elements still in an easy and quick way and at contained or reasonable cost, as well as to modify by need and/or depending on the exigencies and/or circumstances the overall number of the elastic elements so as to bring the device into conformity with the different exigencies.

The device according to the present invention is suitable to be merchandized or put on the market as an assembly kit, wherein the assembly may be completed by the final user or client, thus allowing in this way to further reduce the costs relating to the transport and/or delivery. The final user will be able to assemble the device depending on his particular exigencies, for instance using the number of elastic elements more convenient for his purposes.

Of course, it will be possible to modify the embodiments of the device according to the present invention as described above and depicted in the figures and without leaving the scope of same. It has therefore to be noted that the scope of the present invention is defined by the appended claims.

For instance, the anchoring elements 120 may have a form differing from that of a disc, wherein the particular form or shape may be selected according to the form or shape to be conferred to the container 102.

Moreover, the present invention allows a broad choice of materials for realizing both the anchoring elements 120 and the elastic elements or wires 102; for instance in addition to metals, different materials may be used such as, for instance, plastic, elastomeric, synthetic and/or composite materials.

In the same way, each anchoring element may be realized as a single piece, for instance by means of injections, fusion, extrusion, molding and similar processes, as well as by ultimately reciprocally anchoring component parts, for instance by means of fixing means such as screws or the like, or even by using adhesive materials, glue materials or the like, or even by means of driving with interference or using for instance self-locking washers or similar solutions.

## Claims

1. Device (100) for collecting or picking up fruits or other objects from the ground, said device comprising a container or basket (110) adapted to be rotated on a rotation axis (101) and defined by a plurality of elastic elements (102) which extend between a first and a second opposite anchoring elements (120) disposed or located rotatably along said axis of rotation (101), said container or basket (100) allowing said fruits or other objects to get inside it due to elastic deformation of said elastic elements (102) during rotation on said axis (101) of said container (110) in contact with the ground, wherein a terminal portion (102t) of at least one of said elastic elements (102) is received inside a corresponding receiving seat (160) of at least one of said anchoring elements (120) which extends radially from an inserting or inlet aperture or entrance (129) located on the external circumference of said at least one anchoring element (120) so that an end portion (100e) of said at least one elastic element (102) is engaged due to elastic deformation with corresponding engaging means (125) of said at least one anchoring element (120); wherein access to said terminal portion (102t) can be obtained or gained from outside said receiving seat (160), in such a way that said end portion (102e) may be disengaged from said engaging means (125) by elastically deforming said terminal portion (102t), said terminal portion (102t) being therefore removable from said receiving seat by disengaging said end portion (100e) from said engaging means (125); **characterized in that** said receiving seat (160) is blind or closed in the radial direction from said inserting aperture or entrance (129) toward said axis of rotation (101), **in that** said terminal portion (102t) comprises a curved portion (102c) which is located before said end portion (102e) along said terminal portion (102t) and which confers to said terminal portion (102t) a substantially "U" or hook shape, and **in that** the distance between said end portion (102e) and said inserting or inlet aperture or entrance (129) is less than the distance between said end portion (102e) and said curved portion (102c).

2. Device according to claim 1, **characterized in that** the distance between said engaging means (125) and said inserting or inlet aperture or entrance (129) is less than the distance between said engaging means and said curved portion (102c).

3. Device according to one of claims 1 - 2, **characterized in that** said end portion (102e) comprises an abutment surface in abutment due to elastic deformation against a corresponding abutment surface (125b) of said engaging means (125), and **in that** the distance between each of said abutment surfaces and said inserting or inlet aperture or entrance is less than the distance between each of said abutment surfaces and said curved portion (102c).

4. Device according to claim 3, **characterized in that** said abutment surface of said end portion (102e) comprises a concave portion (102ec) in which there is received a convex portion (125c) of said engaging means (125).

5. Device according to one of claims 1 - 4, **characterized in that** access to said terminal portion (102t) can be gained or obtained through a hole or aperture (126) by means of which said receiving seat (160) is in communication with the outside, wherein said hole or aperture is located in proximity of said inlet or inserting aperture or entrance (129).

6. Device according to claim 5, **characterized in that** said aperture or hole (126) is adapted to allow the passage of a tool adapted to disengage said end portion (102e) from said engaging means (125).

7. Device according to one of claims 1 - 6, **characterized in that** said at least one anchoring element (120) is realized as a single piece in metallic or plastic material.

8. Device according to claim 7, **characterized in that** said at least one anchoring element (120) is realized by means of a fusion or extrusion or a moulding process or the like.

9. Device according to one of claims 1 - 6, **characterized in that** said at least one anchoring element (120) comprises a first portion (122) and a second portion (123) reciprocally fixed to each other in a rigid and ultimate way.

10. Device according to claim 9, **characterized in that** said first portion (122) comprises an engaging sleeve or hub (140) received at least partially in an engaging seat of corresponding shape (141) of said second portion (123) .

11. Device according to claim 10 , **characterized in that** the external surface of said engaging hub or sleeve (140) comprises portions (1) placed in abutment against corresponding portions of the internal surface of said engaging seat (141).

12. Device according to claim 11, **characterized in that** said portions (1) of said external surface of said hub or sleeve (140) and said corresponding portions of said internal surface of said engaging seat are located on corresponding conical surfaces.

13. Device according to one of claims 11 - 12, **characterized in that** said hub or sleeve (140) comprises longitudinal grooves or depressions (3) of said external surface located in correspondence of longitudinal grooves or depressions of the internal surface of said receiving seat (141) so as to define engaging seats for fixing means such as screws or the like adapted to reciprocally fix, in a rigid and ultimate way, said first portion (122) and said second portion (123).

14. Device according to claim 10, **characterized in that** said receiving seat (141) comprises engaging portions driven with interference on said hub or sleeve (140).

15. Device according to one of claims 1 - 14, **characterized in that** at least one of said terminal portions (102t) of at least one of said elastic elements (102) has a cross section (B-B) with a shape different from that of the portion of said at least one elastic element (102) located between its two opposed terminal portions (102t).

16. Device according to claim 15, **characterized in that** said at least one terminal portion (102t) of said at least one elastic element or wire (102) has a cross section (B-B) with a substantially ellipsoidal shape.

17. Device according to one of claims 1 - 16, **characterized in that** at least one of said elastic elements (102) is at least partially received in a substantially tubular sheath (180).

18. Device according to claim 17, **characterized in that** said substantially tubular sheath is realized in a plastic or elastomeric material with lower flexional stiffness than that of said elastic element (102).

## Patentansprüche

1. Vorrichtung (100) zum Sammeln oder Aufnehmen von Früchten oder anderen Objekten vom Boden,
wobei die Vorrichtung einen Behälter oder Korb (110) umfasst, der so ausgelegt ist, dass er um eine Drehachse (101) gedreht werden kann und durch eine Vielzahl von elastischen Elementen (102) definiert ist, die sich zwischen einem ersten und einem zweiten gegenüberliegenden Verankerungselement (120) erstrecken, die entlang der Drehachse (101) drehbar angeordnet oder positioniert sind, wobei der Behälter oder Korb (100) den Früchten oder anderen Objekten ermöglicht, aufgrund einer elastischen Verformung der elastischen Elemente (102), entstehend durch die Drehung um die Achse (101) des Behälters (110) in Kontakt mit dem Boden, in ihn einzudringen, wobei ein Abschlussabschnitt (102t) mindestens eines der elastischen Elemente (102) in einem entsprechenden Aufnahmesitz (160) mindestens eines der Verankerungselemente (120) aufgenommen wird, der sich radial von einer Einsatz- oder Einlassöffnung oder einem Eingang (129) erstreckt, die/der sich am Außenumfang des mindestens einen Verankerungselements (120) befindet, so dass ein Endabschnitt (100e) des mindestens einen elastischen Elements (102) aufgrund einer elastischen Verformung mit einem entsprechenden Eingriffsmittel (125) des mindestens einen Verankerungselements (120) in Eingriff steht, wobei der Zugang zu dem Abschlussabschnitt (102t) von außerhalb des Aufnahmesitzes (160) auf eine solche Weise erhalten oder gewonnen werden kann, dass der Endabschnitt (102e) aus dem Eingriffsmittel (125) durch elastisches Verformen des Abschlussabschnitts (102t) gelöst werden kann, wobei der Abschlussabschnitt (102t) daher vom Aufnahmesitz durch Lösen des Endabschnitts (100e) von dem Eingriffsmittel (125) abnehmbar ist, **dadurch gekennzeichnet, dass** der Aufnahmesitz (160) in radialer Richtung von der Einsatzöffnung oder dem Eingang (129) in Richtung der Drehachse (101) blind oder geschlossen ist, indem der Abschlussabschnitt (102t) einen gekrümmten Abschnitt (102c) umfasst, der vor dem Endabschnitt (102e) entlang des Abschlussabschnitts (102t) angeordnet ist und dem Abschlussabschnitt (102t) eine im Wesentlichen "U"-Form oder Hakenform verleiht, und indem der Abstand zwischen dem Endabschnitt (102e) und der Einsatz- oder Einlassöffnung oder dem Eingang (129) geringer ist als der Abstand zwischen dem Endabschnitt (102e) und dem gekrümmten Abschnitt (102c).

2. Vorrichtung nach Anspruch 1, **dadurch gekennzeichnet, dass** der Abstand zwischen dem Eingriffsmittel (125) und der Einsatz- oder Einlassöffnung oder dem Eingang (129) kleiner ist als der Abstand zwischen dem Eingriffsmittel und dem gekrümmten Abschnitt (102c).

3. Vorrichtung nach einem der Ansprüche 1 bis 2, **dadurch gekennzeichnet, dass** der Endabschnitt (102e) eine Anlagefläche im Widerlager aufgrund einer elastischen Verformung gegen eine entsprechende Anlagefläche (125b) des Eingriffsmittels (125) umfasst, indem der Abstand zwischen jeder der Anlageflächen und der Einsatz- oder Einlassöffnung oder dem Eingang kleiner ist als der Abstand zwischen jeder der Anlageflächen und dem gekrümmten Abschnitt (102c).

4. Vorrichtung nach Anspruch 3, **dadurch gekennzeichnet, dass** die Anlagefläche des Endabschnitts (102e) einen konkaven Abschnitt (102ec) umfasst, in welchen ein konvexer Abschnitt (125c) des Eingriffsmittels (125) aufgenommen ist.

5. Vorrichtung nach einem der Ansprüche 1 bis 4, **dadurch gekennzeichnet, dass** der Zugang zu dem Abschlussabschnitt (102t) durch eine Bohrung oder Öffnung (126) gewonnen oder erhalten werden kann, mittels welcher der Aufnahmesitz (160) mit der Außenseite in Verbindung steht, wobei sich die Bohrung oder die Öffnung in der Nähe des Einlasses oder der Einsatzöffnung oder des Eingangs (129) befindet.

6. Vorrichtung nach Anspruch 5, **dadurch gekennzeichnet, dass** die Öffnung oder Bohrung (126) angepasst ist, um den Durchgang eines Werkzeugs zu ermöglichen, das angepasst ist, um den Endabschnitt (102e) von dem Eingriffsmittel (125) zu lösen.

7. Vorrichtung nach einem der Ansprüche 1 bis 6, **dadurch gekennzeichnet, dass** das mindestens eine Verankerungselement (120) als ein Einzelstück aus metallischem oder plastischem Material ausgeführt ist.

8. Vorrichtung nach Anspruch 7, **dadurch gekennzeichnet, dass** das mindestens eine Verankerungselement (120) durch ein Schmelz- oder Extrusionsverfahren oder ein Formungsverfahren oder dergleichen ausgeführt ist.

9. Vorrichtung nach einem der Ansprüche 1 bis 6, **dadurch gekennzeichnet, dass** das mindestens eine Verankerungselement (120) einen ersten Abschnitt (122) und einen zweiten Abschnitt (123) umfasst, die wechselseitig starr und endgültig aneinander befestigt sind.

10. Vorrichtung nach Anspruch 9, **dadurch gekennzeichnet, dass** der erste Abschnitt (122) eine Eingriffshülse oder -nabe (140) umfasst, die zumindest teilweise in einem Eingriffssitz von entsprechender Form (141) des zweiten Abschnitts (123) aufgenommen ist.

11. Vorrichtung nach Anspruch 10, **dadurch gekennzeichnet, dass** die Außenfläche der Eingriffsnabe oder -hülse (140) Abschnitte (1) umfasst, die an entsprechenden Abschnitten der Innenfläche des Eingriffssitzes (141) anliegen.

12. Vorrichtung nach Anspruch 11, **dadurch gekennzeichnet, dass** die Abschnitte (1) der Außenfläche der Nabe oder Hülse (140) und die entsprechenden Abschnitte der Innenfläche des Eingriffssitzes auf entsprechenden konischen Oberflächen angeordnet sind.

13. Vorrichtung nach einem der Ansprüche 11 bis 12, **dadurch gekennzeichnet, dass** die Nabe oder Hülse (140) Längsnuten oder -vertiefungen (3) der Außenfläche umfasst, die entsprechend den Längsnuten oder -vertiefungen der Innenfläche des Aufnahmesitzes (141) angeordnet sind, um Eingriffssitze für Befestigungsmittel wie Schrauben oder dergleichen zu definieren, die geeignet sind, den ersten Abschnitt (122) und den zweiten Abschnitt (123) wechselseitig auf starre und endgültige Weise aneinander zu befestigen.

14. Vorrichtung nach Anspruch 10, **dadurch gekennzeichnet, dass** der Aufnahmesitz (141) Eingriffsabschnitte umfasst, die mit Interferenz auf der Nabe oder Hülse (140) angetrieben werden.

15. Vorrichtung nach einem der Ansprüche 1 bis 14, **dadurch gekennzeichnet, dass** mindestens einer der Abschlussabschnitte (102t) mindestens eines der elastischen Elemente (102) einen Querschnitt (B-B) mit einer anderen Form als der des Abschnitts des mindestens einen elastischen Elements (102) aufweist, das sich zwischen seinen beiden gegenüberliegenden Abschlussabschnitten (102t) befindet.

16. Vorrichtung nach Anspruch 15, **dadurch gekennzeichnet, dass** der mindestens eine Abschlussabschnitt (102t) des mindestens einen elastischen Elements oder Drahtes (102) einen Querschnitt (B-B) mit einer im Wesentlichen ellipsoiden Form aufweist.

17. Vorrichtung nach einem der Ansprüche 1 bis 16, **dadurch gekennzeichnet, dass** mindestens eines der elastischen Elemente (102) mindestens teilweise in einer im Wesentlichen rohrförmigen Hülle (180) aufgenommen ist.

18. Vorrichtung nach Anspruch 17, **dadurch gekennzeichnet, dass** die im Wesentlichen rohrförmige Hülle aus einem Kunststoff- oder Elastomermaterial mit einer geringeren Biegesteifigkeit als der des elastischen Elements (102) besteht.

## Revendications

1. Dispositif (100) pour collecter ou ramasser des fruits ou autres objets à partir du sol,
ledit dispositif comprenant un contenant ou panier (110) conçu pour être mis en rotation sur un axe de rotation (101) et défini par une pluralité d'éléments élastiques (102) qui s'étendent entre des premier et deuxième éléments d'ancrage opposés (120) disposés ou situés de façon à pouvoir entrer en rotation le long dudit axe de rotation (101), ledit contenant ou panier (100) permettant auxdits fruits ou autres objets d'entrer à l'intérieur de celui-ci en raison d'une déformation élastique desdits éléments élastiques (102) durant la rotation sur ledit axe (101) dudit contenant (110) en contact avec le sol, où une partie terminale (102t) d'au moins un desdits éléments élastiques (102) est reçue à l'intérieur d'un siège de réception correspondant (160) d'au moins un desdits éléments d'ancrage (120) qui s'étend radialement à partir d'une entrée ou ouverture d'insertion ou d'admission (129) située sur la circonférence externe dudit au moins un élément d'ancrage (120) de sorte qu'une partie d'extrémité (100e) dudit au moins un élément élastique (102) soit mise en prise en raison d'une déformation élastique avec un moyen de mise en prise correspondant (125) dudit au moins un élément d'ancrage (120) ; où l'accès à ladite partie terminale (102t) peut être obtenu ou gagné à partir de l'extérieur dudit siège de réception (160), de façon à ce que ladite partie d'extrémité (102e) puisse être mise hors de prise d'avec ledit moyen de mise en prise (125) par déformation élastique de ladite partie terminale (102t), ladite partie terminale (102t) étant ainsi amovible dudit siège de réception par mise hors de prise de ladite partie d'extrémité (100e) d'avec ledit moyen de mise en prise (125) ; **caractérisé en ce que** ledit siège de réception (160) est aveugle ou fermé dans la direction radiale à partir de ladite entrée ou ouverture d'insertion (129) vers ledit axe de rotation (101), **en ce que** ladite partie terminale (102t) comprend une partie incurvée (102c) qui est située avant ladite partie d'extrémité (102e) le long de ladite partie terminale (102t) et qui confère à ladite partie terminale (102t) une forme substantiellement en U ou en crochet, et **en ce que** la distance entre ladite partie d'extrémité (102e) et ladite entrée ou ouverture d'insertion d'admission (129) est inférieure à la distance entre ladite partie d'extrémité (102e) et ladite partie incurvée (102c).

2. Dispositif selon la revendication 1, **caractérisé en ce que** la distance entre ledit moyen de mise en prise (125) et ladite entrée ou ouverture d'insertion ou d'admission (129) est inférieure à la distance entre ledit moyen de mise en prise et ladite partie incurvée (102c).

3. Dispositif selon une des revendications 1 à 2, **caractérisé en ce que** ladite partie d'extrémité (102e) comprend une surface de butée en butée en raison d'une déformation élastique contre une surface de butée correspondante (125b) dudit moyen de mise en prise (125), et **en ce que** la distance entre chacune desdites surfaces de butée et ladite entrée ou ouverture d'insertion ou d'admission est inférieure à la distance entre chacune desdites surfaces de butée et ladite partie incurvée (102c).

4. Dispositif selon la revendication 3, **caractérisé en ce que** ladite surface de butée de ladite partie d'extrémité (102e) comprend une partie concave (102e) dans laquelle est reçue une partie convexe (125ec) dudit moyen de mise en prise (125).

5. Dispositif selon une des revendications 1 à 4, **caractérisé en ce que** l'accès à ladite partie terminale (102t) peut être obtenu ou gagné à travers un trou ou une ouverture (126) au moyen duquel ou de laquelle ledit siège de réception (160) est en communication avec l'extérieur, ledit trou ou ladite ouverture étant situé(e) à proximité de ladite entrée ou ouverture d'admission ou d'insertion (129).

6. Dispositif selon la revendication 5, **caractérisé en ce que** ladite ouverture ou ledit trou (126) est conçu(e) pour permettre le passage d'un outil conçu pour mettre hors de prise ladite partie d'extrémité (102e) d'avec ledit moyen de mise en prise (125).

7. Dispositif selon une des revendications 1 à 6, **caractérisé en ce que** ledit au moins un élément d'ancrage (120) est réalisé sous la forme d'une pièce unique en matière métallique ou plastique.

8. Dispositif selon la revendication 7, **caractérisé en ce que** ledit au moins un élément d'ancrage (120) est réalisé au moyen d'une fusion ou extrusion ou d'un procédé de moulage ou analogue.

9. Dispositif selon une des revendications 1 à 6, **caractérisé en ce que** ledit au moins un élément d'ancrage (120) comprend une première partie (122) et une deuxième partie (123) fixées réciproquement l'une à l'autre de façon rigide et définitive.

10. Dispositif selon la revendication 9, **caractérisé en ce que** ladite première partie (122) comprend un manchon ou moyeu de mise en prise (140) reçu au moins partiellement dans un siège de mise en prise de forme correspondante (141) de ladite deuxième partie (123).

11. Dispositif selon la revendication 10, **caractérisé en ce que** la surface externe dudit moyeu ou manchon de mise en prise (140) comprend des parties (1) placées en butée contre des parties correspondantes de la surface interne dudit siège de mise en prise (141).

12. Dispositif selon la revendication 11, **caractérisé en ce que** lesdites parties (1) de ladite surface externe dudit moyeu ou manchon (140) et lesdites parties correspondantes de ladite surface interne dudit siège de mise en prise sont situées sur des surfaces coniques correspondantes.

13. Dispositif selon une des revendications 11 à 12, **caractérisé en ce que** ledit moyeu ou manchon (140) comprend des rainures ou dépressions longitudinales (3) de ladite surface externe situées en correspondance de rainures ou dépressions longitudinales de la surface interne dudit siège de réception (141) de façon à définir des sièges de mise en prise pour des moyens de fixation tels que des vis ou analogues conçus pour fixer réciproquement, de façon rigide et définitive, ladite première partie (122) et ladite deuxième partie (123).

14. Dispositif selon la revendication 10, **caractérisé en ce que** ledit siège de réception (141) comprend des parties de mise en prise entraînées avec une interférence sur ledit moyeu ou manchon (140).

15. Dispositif selon une des revendications 1 à 14, **caractérisé en ce qu'**au moins une desdites parties terminale (102t) d'au moins un desdits éléments élastiques (102) a une section transversale (B-B) de forme différente de celle de la partie dudit au moins un élément élastique (102) située entre ses deux parties terminales opposées (102t).

16. Dispositif selon la revendication 15, **caractérisé en ce que** ladite au moins une partie terminale (102t) dudit au moins un élément élastique ou fil (102) a une section transversale (B-B) de forme substantiellement ellipsoïdale.

17. Dispositif selon une des revendications 1 à 16, **caractérisé en ce qu'**au moins un desdits éléments élastiques (102) est au moins partiellement reçu dans une gaine substantiellement tubulaire (180).

18. Dispositif selon la revendication 17, **caractérisé en ce que** ladite gaine substantiellement tubulaire est réalisée en matière plastique ou élastomère ayant une rigidité flexionnelle inférieure à celle dudit élément élastique (102).
